# EUROPÄISCHE PATENTSCHRIFT

(11) **EP 3 118 421 B1**
(45) Veröffentlichungstag und Bekanntmachung des Hinweises auf die Patenterteilung: **01.12.2021**
(21) Anmeldenummer: 16179159.5
(22) Anmeldetag: 13.07.2016
(51) Int. Cl.: F01D 17/16, F02C 6/12

(54) **VARIABLE TURBINEN- ODER VERDICHTERGEOMETRIE FÜR EINEN ABGASTURBOLADER**
VARIABLE TURBINE OR COMPRESSOR GEOMETRY FOR AN EXHAUST GAS TURBOCHARGER
GÉOMETRIE VARIABLE DE COMPRESSEUR OU DE TURBINES POUR UN TURBOCOMPRESSEUR DE GAZ D'ECHAPPEMENT

(30) Priorität: 16.07.2015 DE 102015213321
(43) Veröffentlichungstag der Anmeldung: 18.01.2017
(73) Patentinhaber: BMTS Technology GmbH & Co. KG, 70376 Stuttgart (DE)
(72) Erfinder: Lummer, Dirk, 71634 Ludwigsburg (DE); Naunheim, Dirk, 70176 Stuttgart (DE)
(74) Vertreter: BRP Renaud & Partner mbB Rechtsanwälte Patentanwälte Steuerberater

(56) Entgegenhaltungen:
- EP-A2- 1 120 547
- GB-A- 2 217 790
- US-A1- 2014 147 254

## Beschreibung

Die vorliegende Erfindung betrifft eine variable Turbinen- oder Verdichtergeometrie für einen Abgasturbolader gemäß dem Oberbegriff des Anspruchs 1.

Aus der DE 102 62 006 B4 ist eine gattungsgemäße variable Turbinen- oder Verdichtergeometrie für einen Abgasturbolader mit einem Schaufellagerring bekannt, an dem einzelne Leitschaufeln drehbar gelagert sind. Zusätzlich vorgesehen ist ein Verstellring zum simultanen Verstellen der einzelnen Leitschaufeln, wobei der Verstellring mit Stellhebeln der Leitschaufeln in Wirkverbindung steht. EP1120547 offenbart eine weitere variable Turbinen- oder Verdichtergeometrie nach dem Oberbegriff vom Anspruch 1, und US2014/147254, GB2217790 zeigen weiteren Stand der Technik.

Generell werden bei bekannten variablen Turbinen-/Verdichtergeometrien Verstellringe zum simultanen Verstellen einzelner Leitschaufeln verwendet. Ein Verstellen des Verstellrings erfolgt dabei über einen Steller, der über eine Kinematik mittels Anlenkhebel in den Verstellring eingreift und so die erforderlichen Stellkräfte überträgt. An einer Kontaktstelle zwischen einem solchen Anlenkhebel und dem Verstellring kommt es aufgrund der dort herrschenden Relativbewegung zu einem Verschleiß. Um diesen Verschleiß in Grenzen zu halten, ist es bereits bekannt, sowohl den Anlenkhebel als auch den Verstellring im Bereich einer Kontaktzone mit einer Verschleißschutzschicht zu versehen. Ebenfalls bekannt ist es, den Anlenkhebel und/oder den Verstellring dicker auszubilden und dadurch eine zwischen dem Anlenkhebel und dem Verstellring auftretende Flächenpressung zu reduzieren, wodurch ebenfalls ein geringer Verschleiß bei großen Stellkräften und langen Fahrzeuglaufzeiten erreicht werden soll.

Nachteilig eines aufgedickten Verstellringes sind jedoch dessen deutlich erhöhter Materialaufwand und auch das deutlich erhöhte Gewicht.

Die vorliegende Erfindung beschäftigt sich daher mit dem Problem, für eine variable Turbinen- und/oder Verdichtergeometrie der gattungsgemäßen Art eine verbesserte oder zumindest eine alternative Ausführungsform anzugeben, die insbesondere in der Lage ist, hohe Stellkräfte langfristig zu übertragen und trotzdem gewichtsoptimiert ausgebildet zu sein.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Verstellring zum simultanen Verstellen von Leitschaufeln einer variablen Turbinen- oder Verdichtergeometrie lokal im Bereich einer Kontaktfläche zu einem Anlenkhebel zu verstärken und dadurch die dort auftretende Flächenpressung zwischen dem Verstellring und dem Anlenkhebel zu reduzieren. Die erfindungsgemäße variable Turbinen- oder Verdichtergeometrie besitzt dabei den genannten Verstellring, der über eine erste Kontaktfläche mit dem Anlenkhebel und über zweite Kontaktflächen mit Stellhebeln der Leitschaufeln in Wirkverbindung steht. Erfindungsgemäß weist nun der Verstellring zumindest im Bereich der ersten Kontaktfläche ein Zusatzbauteil auf, welches in den Verstellring eingepresst ist und welches die mit dem Anlenkhebel in Wirkverbindung stehende erste Kontaktfläche vergrößert. Durch das erfindungsgemäß eingepresste Zusatzbauteil kann die vergrößerte Kontaktfläche spielfrei am Verstellring befestigt werden, ohne dass hierfür wärmeeintragende Verfahren, wie beispielsweise ein Schweißverfahren, erforderlich sind. Durch das erfindungsgemäß zumindest im Bereich der ersten Kontaktfläche angeordnete Zusatzbauteil ist eine lokal begrenzte Vergrößerung der ersten Kontaktfläche möglich, ohne dass hierfür der Verstellring insgesamt dicker und damit schwerer ausgebildet werden muss. Insgesamt kann somit im Vergleich zu einem komplett aufgedickten Verstellring eine deutliche Gewichtsreduzierung sowie eine deutliche Reduzierung der Materialkosten erzielt werden. Durch das Einpressen kann eine Verbindung, insbesondere eine Presssitzverbindung, geschaffen werden, welche keine zusätzlichen Bearbeitungsschritte erfordert und dadurch kostengünstig auszuführen ist.

Bei einer weiteren vorteilhaften Ausführungsform der erfindungsgemäßen Lösung weist der Verstellring im Bereich zumindest einer zweiten Kontaktfläche ein Zusatzbauteil auf, welches in den Verstellring eingepresst ist und welches die mit dem zugehörigen Stellhebel in Wirkverbindung stehende, zweite Kontaktfläche vergrößert. Das erfindungsgemäße Zusatzbauteil kann somit nicht nur zwischen dem Verstellring und dem Anlenkhebel angeordnet werden, sondern rein theoretisch auch zwischen dem Verstellring und zumindest einem Stellhebel einer Leitschaufel, wodurch auch hier eine größere Kontaktfläche und damit eine reduzierte Flächenpressung und ein geringerer Verschleiß erreicht werden können. Auch in diesem Bereich können die Zusatzbauteile eingepresst werden, was eine nicht nur kostengünstige, sondern auch jeglichen Wärmeeintrag vermeidende Befestigungsmethode darstellt. Insbesondere bei einem Schweißen nämlich, kann ein Verzug des Verstellringes auftreten, der dessen Funktionsfähigkeit beeinträchtigt.

Bei einer vorteilhaften Weiterbildung der erfindungsgemäßen Lösung ist zumindest ein Zusatzbauteil als Metallpulverspritzgussteil ausgebildet. Beim metallischen Pulverspritzgießen wird ein mit einem Binder versehenes Metall (metal injection molding, MIM) in einem Spritzgussprozess verarbeitet. Anschließend wird der Binder wieder entfernt, wodurch es möglich ist, komplex geformte Teile in größerer Stückstahl mit gleichzeitig sehr geringen Toleranzen und geringen Kosten herzustellen.

Bei einer weiteren vorteilhaften Ausführungsform der erfindungsgemäßen Lösung weist zumindest ein Zusatzbauteil Noppen oder noppenähnliche Erhebungen, wie beispielsweise Wellen, auf, welche ein spielfreies Einpressen in den Verstellring ermöglichen. Durch derartige Noppen ist insbesondere eine Presssitzverbindung zwischen dem Zusatzbauteil und dem Verstellring ohne eine Nachbearbeitung möglich, da diese vergleichsweise kleinen Noppen beim Einpressen überdrückt werden können und dadurch einen spielfreien Sitz gewährleisten.

Zweckmäßig ist zumindest ein Zusatzbauteil nitriert und dadurch oberflächenvergütet. Nitrieren wird fachsprachlich auch als Aufsticken bezeichnet und stellt ein Verfahren zum Härten von Stahl dar. Beim Nitrieren erfolgt insbesondere eine Zufuhr von Stickstoff, der die Oberflächenhärte positiv beeinflusst.

Bei einer weiteren vorteilhaften Ausführungsform der erfindungsgemäßen Lösung ist am Verstellring zumindest eine U-förmige Ausnehmung vorgesehen, in welche das zumindest eine Zusatzbauteil formschlüssig eingreift. Zusätzlich kann vorgesehen sein, dass das Zusatzbauteil einen Rand der U-förmigen Ausnehmung umgreift. Durch die formschlüssige Verbindung zwischen dem Zusatzbauteil und der Ausnehmung am Verstellring kann eine besonders zuverlässige und spielfreie Fixierung des Zusatzbauteils am Verstellring gewährleistet werden, insbesondere auch langfristig.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine erfindungsgemäße variable Turbinen- oder Verdichtergeometrie für einen Abgasturbolader,
- Fig. 2: eine Detaildarstellung aus Fig. 1 im Bereich einer ersten Kontaktfläche,
- Fig. 3: eine Ansicht auf die erste Kontaktfläche des Verstellrings bei extrahiertem Verstellring,
- Fig. 4: eine Ansicht auf ein Zusatzbauteil im Bereich einer ersten oder zweiten Kontaktfläche,
- Fig. 5: einen erfindungsgemäßen Verstellring,
- Fig. 6: eine Detailansicht auf ein erfindungsgemäßes Zusatzbauteil.

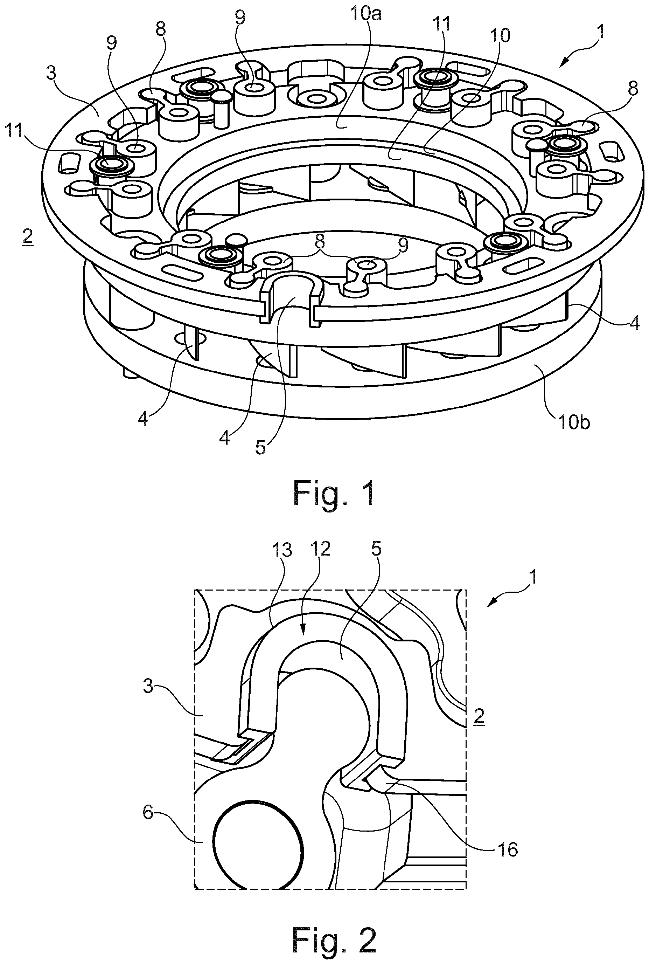

Entsprechend der Fig. 1, weist eine variable Turbinen- oder Verdichtergeometrie 1 für einen Abgasturbolader 2 einen Verstellring 3 zum simultanen Verstellen von Leitschaufeln 4 auf, wobei der Verstellring 3 über eine erste Kontaktfläche 5 (vergleiche insbesondere auch die Fig. 2-6) mit einem Anlenkhebel 6 und über zweite Kontaktflächen 14 mit Stellhebeln 8 der Leitschaufeln 4 in Wirkverbindung steht. Die Leitschaufeln 4 sind dabei über ihre Schaufellagerzapfen 9 in einem Schaufellagerring 10 drehbar gelagert. Selbstverständlich können die Leitschaufeln 4 über ihre Schaufellagerzapfen 9 auch in einem, zwei Schaufellagerringe 10a, 10b aufweisenden Schaufellagerring 10 oder in generell zwei Schaufellagerringen 10a, 10b drehbar gelagert sein. Eine Führung des Verstellrings 3 am Schaufellagerring 10 kann beispielsweise über Rollen 11 erfolgen. In analoger Weise kann selbstverständlich der Verstellring 3 auch über eine Gleitlagerung am Schaufellagerring 10 gelagert sein.

Um nun einen Verschleiß, insbesondere zwischen dem Anlenkhebel 6, der mit einer nicht gezeigten Stelleinrichtung verbunden ist, und dem Verstellring 3 reduzieren zu können, weist der Verstellring 3 zumindest im Bereich der ersten Kontaktfläche 5 ein Zusatzbauteil 12 auf, welches in den Verstellring 3 eingepresst ist und welches die mit dem Anlenkhebel 6 in Wirkverbindung stehende erste Kontaktfläche 5 vergrößert. Das Zusatzbauteil 12 kann in diesem Bereich zusätzlich mit dem Verstellring 3 verklebt sein. Durch das Einpressen des Zusatzbauteils 12 in eine hierfür am Verstellring 3 vorgesehene U-förmige Ausnehmung 13 kann ein nachbearbeitungsfreies Fügen des Zusatzbauteils 12 mit dem Verstellring 3 erfolgen, welches zudem frei von jeglichem Wärmeeintrag ist, welcher beispielsweise bei einem Verschweißen des Zusatzbauteils 12 mit dem Verstellring 3 auftreten würde.

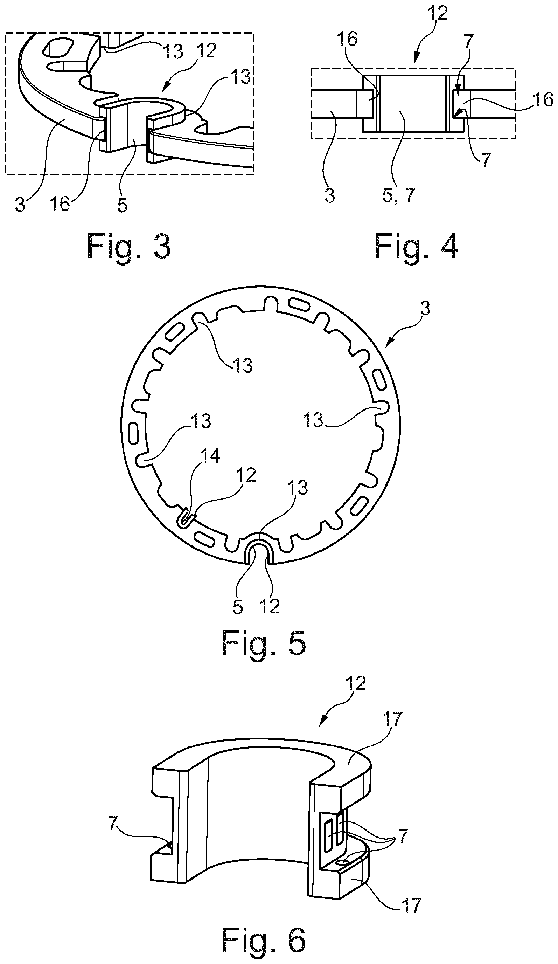

Zusätzlich kann der Verstellring 3 im Bereich zumindest einer zweiten Kontaktfläche 14 ebenfalls ein Zusatzbauteil 12 aufweisen, welches ebenfalls in den Verstellring 3 eingepresst ist und welches die mit dem zugehörigen Stellhebel 8 in Wirkverbindung stehende zweite Kontaktfläche 14 vergrößert (vergleiche insbesondere die Fig. 5). Das Zusatzbauteil 12 kann auch in diesem Bereich mit dem Verstellring 3 verklebt sein. Hierdurch können auch die zwischen den Stellhebeln 8 und dem Verstellring 3 beim Verstellen der Leitschaufeln 4 auftretenden Stellkräfte und damit die auftretende Flächenpressung reduziert werden, wodurch ein Verschleiß minimiert und die Lebensdauer gesteigert werden können.

Zumindest eines dieser Zusatzbauteile 12 kann beispielsweise als Metallpulverspritzgussteil (MIM) hergestellt sein und dadurch in großer Stückzahl hochpräzise und zugleich kostengünstig gefertigt werden.

Um ein spielfreies Einpressen des Zusatzbauteils 12 in die zugehörige U-förmige Ausnehmung 13 am Verstellring 3 gewährleisten zu können, können am Zusatzbauteil 12 Noppen 7 oder noppenähnliche Erhebungen, wie beispielsweise Wellen, (vergleiche Fig. 6) vorgesehen sein, welche beim Einpressen überdrückt werden. Die Noppen 7 bzw. wellenförmigen Erhebungen können dabei selbstverständlich auch an einer mit der U-förmigen Ausnehmung 13 in Kontakt stehenden, gekrümmten Fläche angeordnet sein. Das Zusatzbauteil 12 kann darüber hinaus derart ausgebildet sein, dass es einen Rand 16 der U-förmigen Ausnehmungen 13 umgreift, insbesondere C-förmig im Querschnitt ausgebildet ist und dadurch besonders präzise und zuverlässig am Verstellring 3 fixiert werden kann. In diesem Fall können die Noppen 7 beispielsweise an einem den Rand 16 des Verstellrings 3 umgreifenden Bereich 17 (vergleiche Fig. 6) angeordnet sein.

Um die Lebensdauer des erfindungsgemäßen Verstellrings 3 und damit auch einer damit ausgestatteten variablen Turbinen- oder Verdichtergeometrie 1 zusätzlich steigern zu können, kann vorgesehen sein, dass das Zusatzbauteil 12 und/oder der Verstellring nitriert und dadurch oberflächenvergütet sind.

Gemäß der Fig. 5 ist dabei lediglich ein Zusatzbauteil 12 im Bereich der zweiten Kontaktfläche 14 angeordnet, wobei selbstverständlich auch vorgesehen sein kann, dass auch sämtliche andere Ausnehmungen 13 mit derartigen Zusatzbauteilen 12 ausgekleidet sind.

Mit der erfindungsgemäßen variablen Turbinen- oder Verdichtergeometrie 1 ist es somit möglich, insbesondere hohe Stellkräfte zum Verstellen der Leitschaufeln 4 verschleißarm und damit vorzugsweise über die gesamte Lebensdauer des Abgasturboladers 2 zuverlässig übertragen zu können.

## Patentansprüche

1. Variable Turbinen- oder Verdichtergeometrie (1) für einen Abgasturbolader (2), mit einem Verstellring (3) zum simultanen Verstellen von Leitschaufeln (4), wobei der Verstellring (3) über eine erste Kontaktfläche (5) mit einem Anlenkhebel (6) und über zweite Kontaktflächen (14) mit Stellhebeln (8) der Leitschaufeln (4) in Wirkverbindung steht,
**dadurch gekennzeichnet,**
**dass** der Verstellring (3) zumindest im Bereich der ersten Kontaktfläche (5) ein Zusatzbauteil (12) aufweist, welches in den Verstellring (3) eingepresst ist und welches die mit dem Anlenkhebel (6) in Wirkverbindung stehende erste Kontaktfläche (5) vergrößert.

2. Variable Turbinen- oder Verdichtergeometrie nach Anspruch 1,
**dadurch gekennzeichnet, dass**
der Verstellring (3) im Bereich zumindest einer zweiten Kontaktfläche (14) ein Zusatzbauteil (12) aufweist, welches in den Verstellring (3) eingepresst ist und welches die mit dem zugehörigen Stellhebel (8) in Wirkverbindung stehende zweite Kontaktfläche (14) vergrößert.

3. Variable Turbinen- oder Verdichtergeometrie nach Anspruch 1 oder 2,
**dadurch gekennzeichnet, dass**
zumindest ein Zusatzbauteil (12) als Metallpulverspritzgussteil ausgebildet ist.

4. Variable Turbinen- oder Verdichtergeometrie nach einem der Ansprüche 1 bis 3,
**dadurch gekennzeichnet, dass**
zumindest ein Zusatzbauteil (12) Noppen (7) aufweist, welche ein spielfreies Einpressen in den Verstellring (3) ermöglichen.

5. Variable Turbinen- oder Verdichtergeometrie nach einem der vorhergehenden Ansprüche,
**dadurch gekennzeichnet, dass**
zumindest ein Zusatzbauteil (12) nitriert und dadurch oberflächenvergütet ist.

6. Variable Turbinen- oder Verdichtergeometrie nach einem der vorhergehenden Ansprüche,
**dadurch gekennzeichnet, dass**
am Verstellring (3) zumindest eine U-förmige Ausnehmung (13) vorgesehen ist, in welche das zumindest eine Zusatzbauteil (12) formschlüssig eingreift.

7. Variable Turbinen- oder Verdichtergeometrie nach Anspruch 6,
**dadurch gekennzeichnet, dass**
das Zusatzbauteil (12) derart ausgebildet ist, dass es einen Rand (16) der U-förmigen Ausnehmung (13) umgreift.

8. Variable Turbinen- oder Verdichtergeometrie nach einem der vorhergehenden Ansprüche,
**dadurch gekennzeichnet, dass**
das Zusatzbauteil (12) mit dem Verstellring (3) verklebt ist.

9. Abgasturbolader (2) mit einer variablen Turbinen- oder Verdichtergeometrie (1) nach einem der vorhergehenden Ansprüche.

## Claims

1. Variable turbine or compressor geometry (1) for an exhaust gas turbocharger (2), comprising an adjusting ring (3) for simultaneously adjusting guide vanes (4), wherein the adjusting ring (3) is in operative connection with an articulated lever (6) via a first contact surface (5) and with adjusting levers (8) of guide vanes (4) via second contact surfaces (14),
**characterised in that**
the adjusting ring (3) includes, at least in the region of the first contact surface (5), an additional component (12) which is pressed into the adjusting ring (3) and which increases the first contact surface (5) in operative connection with the articulated lever (6).

2. Variable turbine or compressor geometry according to claim 1,
**characterised in that**
the adjusting ring (3) has an additional component (12) in the region of at least one second contact surface (14), which additional component is pressed into the adjusting ring (3) and which increases the second contact surface (14) in operative connection with the associated adjusting lever (8).

3. Variable turbine or compressor geometry according to claim 1 or 2,
**characterised in that**
at least one additional component (12) is configured as a metal-powder injection-moulded part.

4. Variable turbine or compressor geometry according to any of claims 1 to 3,
**characterised in that**
at least one additional component (12) has bulges (7) which facilitate a play-free pressing into the adjusting ring (3).

5. Variable turbine or compressor geometry according to any of the preceding claims,
**characterised in that**
at least one additional component (12) is nitrided and thereby given a surface finish.

6. Variable turbine or compressor geometry according to any of the preceding claims,
**characterised in that**
on the adjusting ring (3) at least one U-shaped recess (13) is provided, into which the at least one additional component (12) positively engages.

7. Variable turbine or compressor geometry according to claim 6,
**characterised in that**
the additional component (12) is configured to engage around an edge (16) of the U-shaped recess (13).

8. Variable turbine or compressor geometry according to any of the preceding claims,
**characterised in that**
the additional component (12) is adhesively bonded to the adjusting ring (3).

9. Exhaust gas turbocharger (2) with a variable turbine and/or compressor geometry (1) according to any of the preceding claims.

## Revendications

1. Géométrie variable de turbine ou de compresseur (1) pour un turbocompresseur de suralimentation (2), avec un anneau de réglage (3) pour le réglage simultané d'aubes de guidage (4), dans laquelle l'anneau de réglage (3) est en liaison active par le biais d'une première surface de contact (5) avec un levier d'articulation (6) et par le biais de secondes surfaces de contact (14) avec des leviers de réglage (8) des aubes de guidage (4),
**caractérisée en ce**
**que** l'anneau de réglage (3) présente au moins dans la zone de la première surface de contact (5) un composant supplémentaire (12) qui est enfoncé dans l'anneau de réglage (3) et qui augmente la première surface de contact (5) se trouvant en liaison active avec le levier d'articulation (6).

2. Géométrie variable de turbine ou de compresseur (1) selon la revendication 1,
**caractérisée en ce que**
l'anneau de réglage (3) présente dans la zone au moins d'une seconde surface de contact (14) un composant supplémentaire (12) qui est enfoncé dans l'anneau de réglage (3) et qui augmente la seconde surface de contact (14) se trouvant en liaison active avec le levier de réglage (8) afférent.

3. Géométrie variable de turbine ou de compresseur (1) selon la revendication 1 ou 2,
**caractérisée en ce qu'**
au moins un composant supplémentaire (12) est réalisé comme pièce moulée par injection de poudre métallique.

4. Géométrie variable de turbine ou de compresseur (1) selon l'une quelconque des revendications 1 à 3,
**caractérisée en ce qu'**
au moins un composant supplémentaire (12) présente des tétons (7) qui permettent un enfoncement sans jeu dans l'anneau de réglage (3).

5. Géométrie variable de turbine ou de compresseur (1) selon l'une quelconque des revendications précédentes,
**caractérisée en ce qu'**
au moins un composant supplémentaire (12) est nitruré et ainsi traité sur la surface.

6. Géométrie variable de turbine ou de compresseur (1) selon l'une quelconque des revendications précédentes,
**caractérisée en ce qu'**
au moins un évidement (13) en forme de U est prévu au niveau de l'anneau de réglage (3), dans lequel évidement l'au moins un composant supplémentaire (12) vient en prise par complémentarité de formes.

7. Géométrie variable de turbine ou de compresseur (1) selon la revendication 6,
**caractérisée en ce que**
le composant supplémentaire (12) est réalisé de telle manière qu'il entoure un bord (16) de l'évidement en forme de U (13).

8. Géométrie variable de turbine ou de compresseur (1) selon l'une quelconque des revendications précédentes,
**caractérisée en ce que**
le composant supplémentaire (12) est collé à l'anneau de réglage (3).

9. Turbocompresseur de suralimentation (2) avec une géométrie variable de turbine ou de compresseur (1) selon l'une quelconque des revendications précédentes.
